# EUROPEAN PATENT APPLICATION

(11) **EP 4 742 369 A1**
(43) Date of publication of application: **13.05.2026**
(21) Application number: 24872687.9
(22) Date of filing: 19.07.2024
(51) Int. Cl.: H01M 10/613, H01M 10/6552, H01M 10/625

(54) **BATTERY PACK AND VEHICLE COMPRISING SAME**

(30) Priority: 26.09.2023 KR 20230129708
(71) Applicant: LG Energy Solution, Ltd., Seoul 07335 (KR)
(72) Inventor: JUNG, In-Hyuk, Daejeon 34122 (KR); PARK, So-Jeong, Daejeon 34122 (KR); AHN, Jun-Young, Daejeon 34122 (KR); OH, Kwang-Keun, Daejeon 34122 (KR); LEE, Yong-Ho, Daejeon 34122 (KR); YANG, Jin-Oh, Daejeon 34122 (KR)
(74) Representative: Goddar, Heinz J.
(86) International application number: PCT/KR2024/010513
(87) International publication number: WO 2025/070977

(57) **Abstract**

Disclosed is a battery pack, which includes a cell array structure including a plurality of battery cells and a plurality of cooling tubes provided between the plurality of battery cells; a pack case configured to accommodate the cell array structure; and a cooling pipe unit installed in communication with a cooling line for circulation of a cooling medium and configured to connect the plurality of cooling tubes in one direction within the pack case along a stacking direction of the plurality of cooling tubes.

## Description

### TECHNICAL FIELD

The present application claims priority to Korean Patent Application No. 10-2023-0129708 filed on September 26, 2023 in the Republic of Korea, the disclosures of which are incorporated herein by reference.

The present disclosure relates to a battery pack and a vehicle including the battery pack, and more particularly, to a battery pack with improved energy density and a vehicle including the battery pack

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

The conventional battery pack has a cooling line structure to cool the battery cells. The cooling line structure includes a plurality of cooling tubes provided between the battery cells, a cooling line connected to an external cooling device for supplying or recovering a cooling medium to/from the plurality of cooling tubes, and a cooling pipe connecting the cooling line and the plurality of cooling tubes.

The conventional cooling pipe is generally formed in a predetermined length within the pack case of the battery pack for connection to the plurality of cooling tubes, and is provided on both sides of the edge of the pack case of the battery pack.

However, the cooling pipe structure of the conventional battery pack has a disadvantage in terms of energy density of the battery pack since the volume occupied by the structure within the pack case increases. In addition, the cooling structure of the conventional battery pack has a problem in that the connection structure of the cooling pipe connected to the plurality of cooling tubes is complicated, and thus the resulting assembly process is also complicated.

Therefore, there is a need to find a way to provide a battery pack that may increase space utilization and increase energy density. In addition, it is necessary to find a way to increase process efficiency by increasing assembly.

### DISCLOSURE

### Technical Problem

Therefore, the present disclosure is directed to providing a battery pack that may increase space utilization and maximize energy density by simplifying a cooling line structure, and a vehicle including the battery pack.

In addition, the present disclosure is also directed to providing a battery pack that may increase process efficiency by increasing assembly, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack, comprising: a cell array structure including a plurality of battery cells and a plurality of cooling tubes provided between the plurality of battery cells; a pack case configured to accommodate the cell array structure; and a cooling pipe unit installed in communication with a cooling line for circulation of a cooling medium and configured to connect the plurality of cooling tubes in one direction within the pack case along a stacking direction of the plurality of cooling tubes.

Also, preferably, the cooling pipe unit may be disposed between ends of the plurality of cooling tubes and configured not to protrude beyond the ends of the plurality of cooling tubes in a direction toward an inner wall of the pack case.

Also, preferably, the cooling pipe unit may have a smaller thickness than ends of the plurality of cooling tubes.

Also, preferably, the cooling pipe unit may be configured not to protrude beyond ends of the plurality of cooling tubes in a height direction of the ends of the plurality of cooling tubes.

Also, preferably, the cooling pipe unit may be provided in plurality, and the plurality of cooling pipe units may be sequentially connected to the plurality of cooling tubes in the one direction along the stacking direction of the plurality of cooling tubes when assembling the cell array structure.

Also, preferably, the plurality of cooling pipe unit may include a main cooling pipe unit connected to the cooling line; and a plurality of side cooling pipe units configured to communicate with the main cooling pipe.

Also, preferably, the main cooling pipe unit may be disposed between the plurality of side cooling pipe units.

Also, preferably, the cell array structure may include a side frame that accommodates the plurality of battery cells in a longitudinal direction of the pack case, and the cooling pipe unit may be provided to face the side frame in the longitudinal direction and disposed to be spaced apart from the side frame by a predetermined distance.

Also, preferably, the side frame may include a pair of side walls disposed on both sides of an outermost side of the cell array structure and configured to support at least one row of battery cells in the longitudinal direction of the pack case; and a plurality of side structures provided between the pair of side walls and configured to support at least two rows of battery cells in the longitudinal direction of the pack case, and the cooling pipe unit may be provided to face the plurality of side structures in the longitudinal direction of the pack case and disposed to be spaced apart from the plurality of side structures by a predetermined distance.

Also, preferably, the cooling pipe unit may be provided in plurality, and a length of each cooling pipe unit may be smaller than or equal to a width of each side structure in the stacking direction.

Also, preferably, ends of the plurality of cooling tubes may protrude out of the side frame in the longitudinal direction of the pack case, and the cooling pipe unit may be sequentially connected to the plurality of cooling tubes along a stacking direction of the side frame.

Also, preferably, the cooling pipe unit may include an inlet pipe configured to guide the cooling medium from the cooling line to the plurality of cooling tubes; and an outlet pipe configured to export the cooling medium, which has circulated through the plurality of cooling tubes, to the cooling line, and the inlet pipe and the outlet pipe may be disposed between ends of the plurality of cooling tubes in a height direction of the ends of the plurality of cooling tubes.

Also, preferably, the inlet pipe and the outlet pipe may be configured not to protrude beyond the ends of the plurality of cooling tubes in the height direction of the ends of the plurality of cooling tubes.

Also, preferably, the inlet pipe may be disposed lower than the outlet pipe in the height direction of the ends of the plurality of cooling tubes.

In addition, the present disclosure also provides a vehicle, comprising the battery pack according to the former embodiments.

### Advantageous Effects

According to various embodiments as above, it is possible to provide a battery pack that may increase space utilization and maximize energy density by simplifying a cooling line structure, and a vehicle including the battery pack.

In addition, according to various embodiments as above, it is possible to provide a battery pack that may increase process efficiency by increasing assembly, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is an exploded perspective view showing the battery pack according to an embodiment of the present disclosure.
FIG. 3 is a drawing for illustrating the main part of the battery pack according to an embodiment of the present disclosure.
FIG. 4 is a plan view showing the main part of the battery pack according to an embodiment of the present disclosure.
FIG. 5 is an enlarged view showing the main part of the battery pack according to an embodiment of the present disclosure.
FIG. 6 is a drawing for illustrating a main cooling pipe unit of a cooling pipe unit of the battery pack according to an embodiment of the present disclosure.
FIG. 7 is a drawing for illustrating a side cooling pipe unit of the cooling pipe unit of the battery pack according to an embodiment of the present disclosure.
FIG. 8 is a drawing for illustrating a cooling line of the battery pack according to an embodiment of the present disclosure.
FIG. 9 is a drawing for illustrating a cell array structure of the battery pack according to an embodiment of the present disclosure.
FIG. 10 is a drawing for illustrating the assembly of the cell array structure and the cooling pipe unit of the battery pack according to an embodiment of the present disclosure.
FIGS. 11 and 12 are drawings for illustrating the assembly of the cooling pipe unit and the cooling line of the battery pack according to an embodiment of the present disclosure.
FIG. 13 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

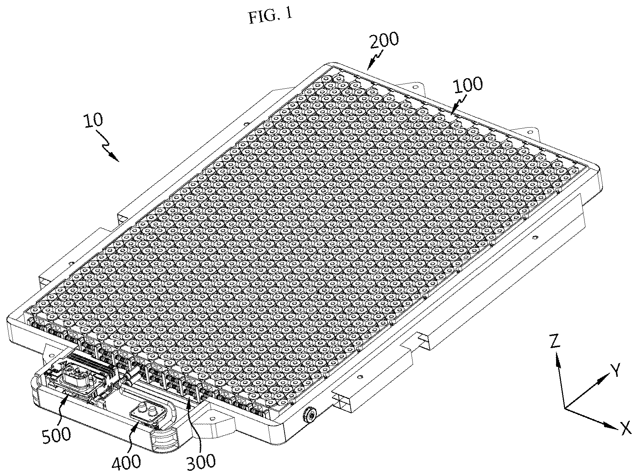

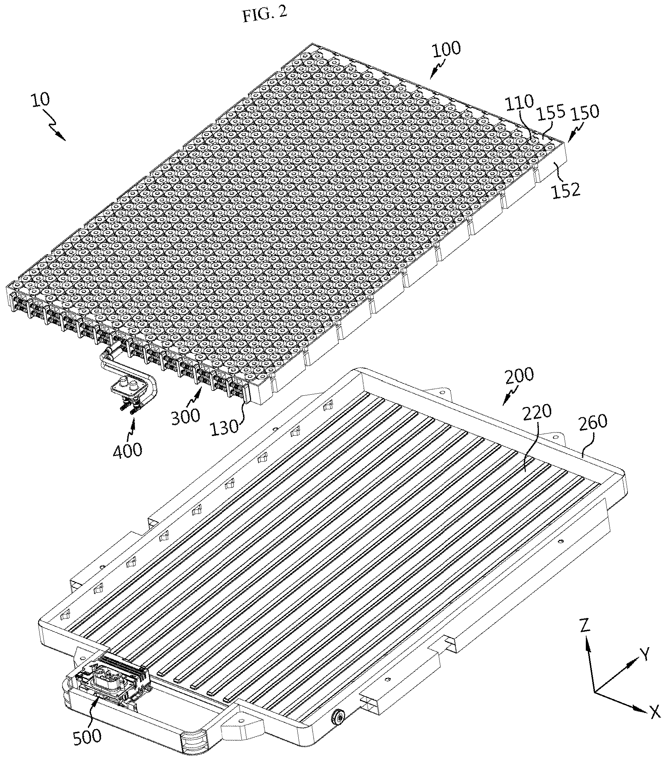

FIG. 1 is a diagram for illustrating a battery pack according to an embodiment of the present disclosure, and FIG. 2 is an exploded perspective view showing the battery pack according to an embodiment of the present disclosure.

Referring to FIGS. 1 and 2, the battery pack 10 may include a cell array structure 100, a pack case 200, and a cooling pipe unit 300.

The cell array structure 100 may include a plurality of battery cells 110 and a plurality of cooling tubes 130 provided between the plurality of battery cells 110.

The plurality of battery cells 110 are secondary batteries. For example, the plurality of battery cells 110 may be provided as cylindrical secondary batteries, pouch-shaped secondary batteries, or prismatic secondary batteries. Hereinafter, in this embodiment, the plurality of battery cells 110 will be described as being provided as cylindrical secondary batteries.

The plurality of cooling tubes 130 are for cooling the battery cells 110, and each cooling tube 130 may be formed to have a predetermined length along the longitudinal direction (Y-axis direction) of the pack case 200. The plurality of cooling tubes 130 may be arranged to be spaced apart from each other by a predetermined distance along the width direction (X-axis direction) of the pack case 200.

The pack case 200 may accommodate the cell array structure 100. Specifically, the pack case 200 has a predetermined accommodation space that may accommodate the cell array structure 100, and may be coupled with the cell array structure 100 to stably support the cell array structure 100.

The cooling pipe unit 300 is installed in communication with the cooling line 400 for circulation of the cooling medium, and may be configured to connect the plurality of cooling tubes 130 along the stacking direction (X-axis direction) of the plurality of cooling tubes 130 in one direction (-Y-axis direction) within the pack case 200.

In the battery pack 10 according to an embodiment of the present disclosure, since the interconnection of the cooling tubes 130 and the connection of the cooling line 400 through the cooling pipe unit 300 are performed in one direction (-Y-axis direction) within the pack case 200, it is possible to simplify the cooling line connection structure for cooling.

Moreover, in the battery pack 10 according to an embodiment of the present disclosure, the space occupied by the cooling pipe unit 300 within the pack case 200 may be reduced, thereby increasing space utilization within the pack case 200 and also increasing the overall energy density significantly.

In addition, in the battery pack 10 according to an embodiment of the present disclosure, the assembly process tack time of the entire battery pack 10 may be reduced through the simplified connection structure of the cooling pipe unit 300, thereby significantly increasing overall process efficiency.

Hereinafter, the cooling pipe unit 300 according to an embodiment of the present disclosure will be described in more detail.

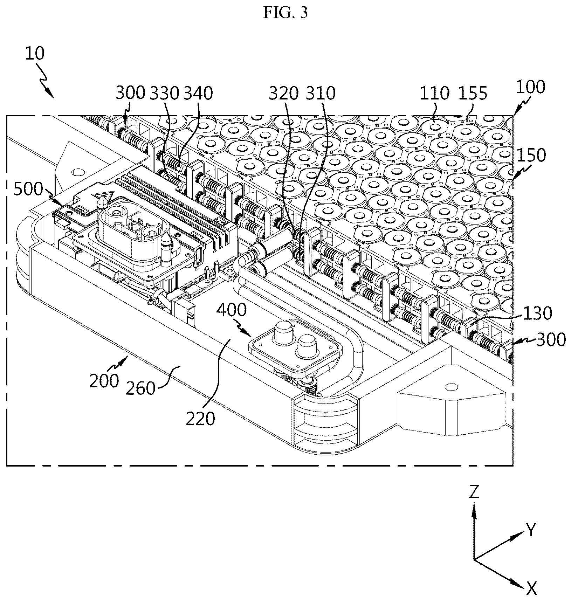

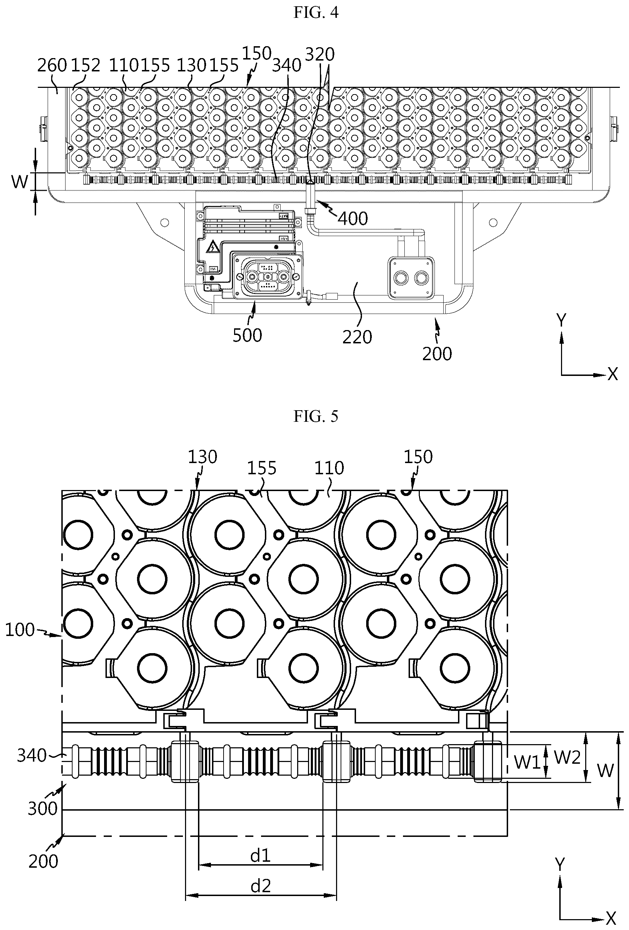

FIG. 3 is a drawing for illustrating the main part of the battery pack according to an embodiment of the present disclosure, FIG. 4 is a plan view showing the main part of the battery pack according to an embodiment of the present disclosure, and FIG. 5 is an enlarged view showing the main part of the battery pack according to an embodiment of the present disclosure.

Referring to FIGS. 3 to 5, the cooling pipe unit 300 is disposed between the ends (-Y-axis direction) of the plurality of cooling tubes 130, and may not protrude beyond the ends (-Y-axis direction) of the plurality of cooling tubes 130 in a direction toward the inner wall (-Y-axis direction) of the pack case 200.

Therefore, in the battery pack 10 according to an embodiment of the present disclosure, when assembling the cooling pipe unit 300 and the cooling tubes 130, the cooling pipe unit 300 and the cooling tubes 130 does not collide or interfere with the inner wall (-Y-axis direction) of the pack case 200, so the risk of damage or poor assembly of the cooling pipe unit 300 that may occur during assembly of the cooling pipe unit 300 may be significantly reduced.

The cooling pipe unit 300 may have a thickness (W1) smaller than the thickness (W2) of the ends of the plurality of cooling tubes 130. Depending on the thickness (W2) of the cooling pipe unit 300, protrusion of the cooling pipe unit 300 out of the plurality of cooling tubes 130 may be more clearly prevented during assembly.

In addition, in the battery pack 10 according to an embodiment of the present disclosure, the thickness (W1) of the cooling pipe units 300 is smaller than the end thickness (W2) of the cooling tubes 130, so the end width (W) at the edge in the one direction (-Y-axis direction) of the pack case 200 may not be caused. That is, in an embodiment of the present disclosure, since it is relatively not required to secure space at the edge in the one direction (-Y-axis direction) of the pack case 200 according to the installation of the cooling pipe units 300, the width in the longitudinal direction (Y-axis direction) of the pack case 200 may be reduced as much as possible. As an example, in this embodiment, the end width (W) at the edge in the one direction (-Y-axis direction) of the pack case 200 may be approximately 43 mm.

As such, in an embodiment of the present disclosure, since it is just required to secure only a predetermined width (W) capable of covering the end thickness (W2) of the cooling tubes 130 at the edge in the one direction (-Y-axis direction) of the pack case 200, the width in the longitudinal direction (Y-axis direction) of the entire pack case 200 may be reduced as much as possible.

Moreover, the cooling pipe unit 300 may not protrude beyond the ends of the plurality of cooling tubes 130 in the height direction (Z-axis direction) of the ends of the plurality of cooling tubes 130.

Therefore, in the battery pack 10 according to an embodiment of the present disclosure, since the cooling pipe unit 300 does not protrude more than the cooling tubes 130 even in the height direction (Z-axis direction) of the pack case 200, in the height direction (Z-axis direction) of the pack case 200, the increase in the size of the entire battery pack 10 due to the cooling pipe unit 300 or the interference with other components may be more securely prevented.

The cooling pipe unit 300 may be provided in plurality.

The plurality of cooling pipe units 300 may be connected sequentially to the plurality of cooling tubes 130 in the one direction (-Y-axis direction) along the stacking direction (X-axis direction) of the plurality of cooling tubes 130, when assembling the cell array structure 100.

As such, in the battery pack 10 according to an embodiment of the present disclosure, since the cooling pipe units 300 are connected together with the cooling tubes 130 when assembling the cell array structure 100, the connection assembly process of the cooling pipe units 130 may be faster and more simplified.

Below, the specific configuration of the plurality of cooling pipe unit 300 will be described in more detail.

The plurality of cooling pipe units 300 may include a main cooling pipe unit 310, 320 connected to the cooling line 400 and a plurality of side cooling pipe units 330, 340 connected to the main cooling pipe unit 310, 320.

The main cooling pipe unit 310, 320 may be arranged between the plurality of side cooling pipe units 330, 340. Specifically, the main cooling pipe unit 310, 320 may be provided near an approximate central location between the plurality of side cooling pipe units 330, 340.

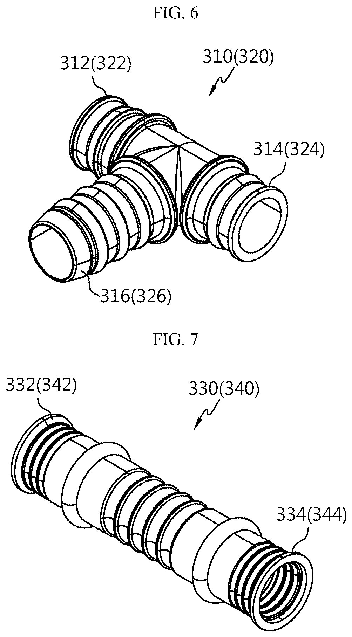

FIG. 6 is a drawing for illustrating a main cooling pipe unit of a cooling pipe unit of the battery pack according to an embodiment of the present disclosure.

Referring to FIG. 6 along with FIGS. 3 to 5, the main cooling pipe unit 310, 320 may include a first connection portion 312, 322, a second connection portion 314, 324, and a third connection portion 316, 326.

The first connection portion 312, 322 may be connected in communication with the cooling tubes 130 at one side (-X-axis direction) facing in the stacking direction (X-axis direction), and the second connection portion 314, 324 may be connected in communication with the cooling tubes 130 at the other side (+X-axis direction) facing in the stacking direction (Z-axis direction).

The third connection portion 316, 326 may be in communication with the first connection portion 312, 322 and the second connection portion 314, 324. The third connection portion 316, 326 is for connection with the cooling line 400 and may be connected in communication with the inlet connection portion 430 and the outlet connection portion 450 of the cooling line 400.

FIG. 7 is a drawing for illustrating a side cooling pipe unit of the cooling pipe unit of the battery pack according to an embodiment of the present disclosure.

Referring to FIG. 7 along with FIGS. 3 to 5, the plurality of side cooling pipe units 330, 340 may include a first connection portion 332, 342 and a second connection portion 334, 344.

The first connection portion 332, 342 may be connected in communication with the cooling tubes 130 at one side (-X-axis direction) facing in the stacking direction (X-axis direction), the second connection portion 334, 344 may be in communication with the first connection portion 332, 342 and may be connected in communication with the cooling tube 130 at the other side (+X-axis direction) facing in the stacking direction (X-axis direction).

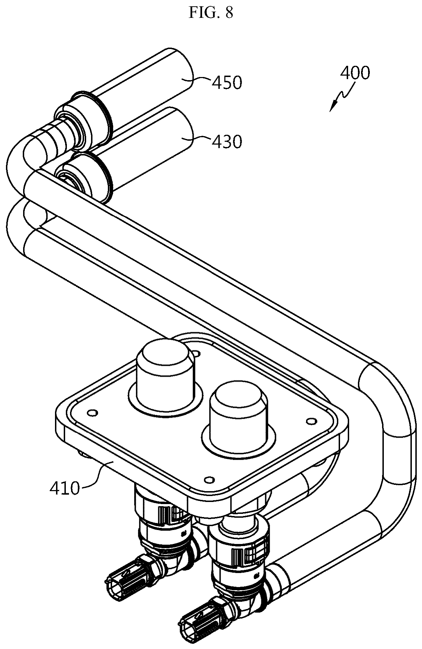

FIG. 8 is a drawing for illustrating a cooling line of the battery pack according to an embodiment of the present disclosure.

Referring to FIG. 8 along with FIGS. 3 to 5, the battery pack 10 may include the cooling line 400.

The cooling line 400 may be connected to an external cooling device to supply a cooling medium to the cooling tube 130 and export the cooling medium, which has circulated through the cooling tubes 130, to the external cooling device. The cooling medium may be provided as a cooling fluid that may circulate the cooling tubes 130 while cooling the battery cells 110. As an example, the cooling medium may be prepared as a cooling water. Without being limited thereto, of course, the cooling medium may be prepared as any other cooling fluid that may circulate the cooling tubes 130 while cooling the battery cells 110.

The cooling line 400 may include a line body 410, an inlet connection portion 430, and an outlet connection portion 450.

The line body 410 is mounted within the pack case 200 and may be connected to an external cooling device. To this end, a part of the line body 410 may be exposed to the outside of the pack case 200 for connection to the external cooling device.

The inlet connection portion 430 is provided to the line body 410 and may be connected to the main cooling pipe unit 310. Specifically, the inlet connection portion 430 may be connected to an inlet pipe 310 of the main cooling pipe unit 310, 320, explained later.

The outlet connection portion 450 is provided to the line body 410 and may be connected to the main cooling pipe unit 320. Specifically, the outlet connection portion 450 may be connected to the outlet pipe 320 of the main cooling pipe unit 310, 320, explained later.

Hereinafter, a specific connection structure between the cooling pipe unit 300 and the cell array structure 100 according to an embodiment of the present disclosure will be described in more detail.

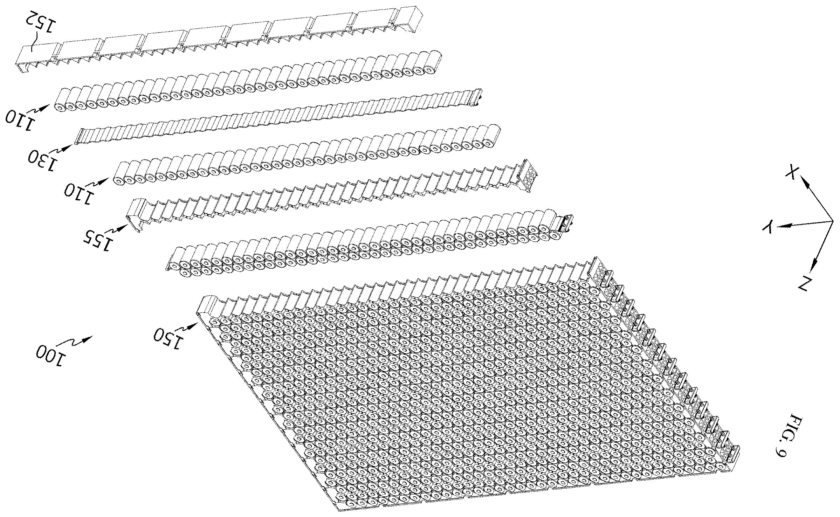

FIG. 9 is a drawing for illustrating a cell array structure of the battery pack according to an embodiment of the present disclosure.

Referring to FIG. 9 along with FIGS. 3 to 5, the cell array structure 100 may include a side frame 150.

The side frame 150 may accommodate the plurality of battery cells 110 in the longitudinal direction (Y-axis direction) of the pack case 200. The cooling pipe unit 300 is provided to face the side frame 150 in the longitudinal direction (Y-axis direction) and may be arranged to be spaced apart from the side frame 150 by a predetermined distance.

Therefore, in the battery pack 10 according to an embodiment of the present disclosure, problems such as collision or interference with the side frame 150 do not occur when assembling the cooling pipe unit 300 and the cell array structure 100, so it is possible to prevent the cooling pipe unit 300 from being damaged or poorly assembled due to collision or interference with the side frame 150.

Hereinafter, the side frame 150 of the cell array structure 100 will be described in more detail.

The side frame 150 may include a pair of side walls 152 and a plurality of side structures 155.

The pair of side walls 152 are disposed at both sides of the outermost side (+X-axis direction and -X-axis direction) of the cell array structure 100, and may support at least one row of battery cells 110 in the longitudinal direction (Y-axis direction) of the pack case 200. The pair of side walls 152 may be fixed to the outer side wall 260 of the pack case 200, explained later, through a fastening member or the like. Accordingly, the cell array structure 100 may be more stably fixed and supported on the pack case 200.

The plurality of side structures 155 are provided between the pair of side walls 152 in the stacking direction (X-axis direction), and may support at least two rows of battery cells 110 in the longitudinal direction (Y-axis direction) of the pack case 200. Specifically, the plurality of side structures 155 may support the battery cells 110 along the longitudinal direction (Y-axis direction) at the front side (+X-axis direction) and the rear side (-X-axis direction) according to the stacking direction (X-axis direction).

The cooling pipe unit 300 is provided to face the plurality of side structures 155 in the longitudinal direction (Y-axis direction) of the pack case 200, and may be arranged to be spaced apart from the plurality of side structures 155 by a predetermined distance. Therefore, in the battery pack 10 according to an embodiment of the present disclosure, when assembling the cell array structure 100 and the cooling pipe unit 300, there is no interference or collision with the side structures 155, so it is possible to effectively prevent the cooling pipe units 300 from being damaged or poorly assembled.

Also, the length (d1) of each cooling pipe unit 300 may be smaller than or equal to the width (d2) of each side structure 155 in the stacking direction (X-axis direction).

Therefore, in the battery pack 10 according to an embodiment of the present disclosure, when assembling the cell array structure 100 and the cooling pipe unit 300, it is possible to fundamentally prevent assembly defects of the side structures 150 that may be caused by the cooling pipe unit 300.

Hereinafter, the assembly process of the cell array structure 100 and the cooling pipe unit 300 of the battery pack 10 according to this embodiment will be described in more detail.

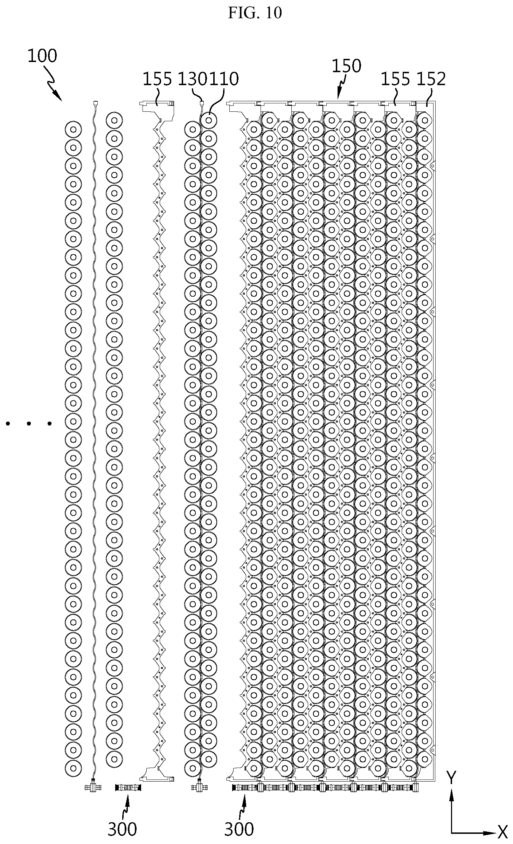

FIG. 10 is a drawing for illustrating the assembly of the cell array structure and the cooling pipe unit of the battery pack according to an embodiment of the present disclosure.

Referring to FIG. 10, a manufacturer or the like may assemble the cooling pipe unit 300 together when assembling the cell array structure 100 of the battery pack 10 (see FIG. 1). First, the manufacturer or the like may fix the cooling tube 130 between the battery cells 110 by fixing the cooling tube 130 between the battery cells 110 using an adhesive or the like. Hereinafter, for convenience of explanation, the assembly in which the cooling tube 130 is fixed between the battery cells 110 is referred to as a cell tube assembly.

After that, the manufacturer or the like may dispose the side wall 152 of the side frame 150 at the outermost position, then dispose the cell tube assembly, and then dispose the side structure 155 of the side frame 150. In addition, the manufacturer or the like may dispose the cell tube assembly again, and at this time, the manufacturer or the like may connect the cooling pipe unit 300 to the cooling tubes 130 of the cell tube assemblies.

In this way, the manufacturer or the like assembles the cell tube assemblies and the side structures 155 while sequentially disposing them, and during this assembly process, the cooling pipe units 300 may be sequentially connected to the cooling tubes 130 of the cell tube assemblies. The cooling pipe units 300 may be connected to the cooling tubes 130 at the ends of the cooling tubes 130 protruding out of the side frame 150. That is, the ends of the plurality of cooling tubes 130 protrude out of the side frame 150 in the longitudinal direction (Y-axis direction) of the pack case 200 (see FIG. 2), and the cooling pipe units 300 may be sequentially connected to the plurality of cooling tubes 130 along the stacking direction (X-axis direction) of the side frame 150.

After the side structures 155, the cell tube assembly, and the cooling pipe units 130 are completely connected, the manufacturer or the like may connect the remaining one of the pair of side walls 152 of the side frame 150 to the cell tube assembly to complete the assembly of the cell array structure 100.

Meanwhile, without configuring the cell tube assembly, which is an assembly in which the cooling tube 130 is fixed between the battery cells 110, at the time of manufacturing, the manufacturer or the like may fix the battery cells 110 and the cooling tubes 130 along with assembly with the side frame 150 while disposing in the order of the battery cells 110, the cooling tube 130, and the battery cells 130.

As such, in the battery pack 10 according to an embodiment of the present disclosure, since the cooling pipe units 130 are assembled together during the sequential assembly process along the stacking direction (X-axis direction) of the cell array structure 100, the assembly process of the cooling pipe units 130 is simplified, and thus it is possible to reduce the overall assembly tap time and significantly enhance the assembly process efficiency.

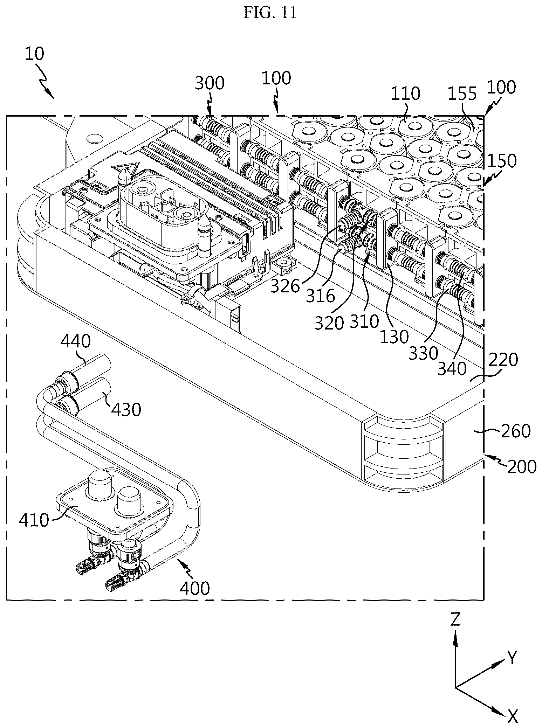

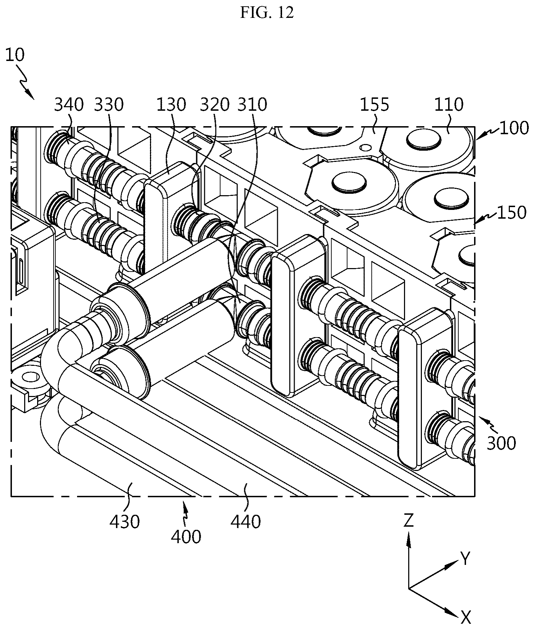

FIGS. 11 and 12 are drawings for illustrating the assembly of the cooling pipe unit and the cooling line of the battery pack according to an embodiment of the present disclosure.

Referring to FIGS. 11 and 12, when the cell array structure 100 and the cooling pipe units 130 are completely assembled, the manufacturer or the like may place the cell array structure 100 in the pack case 200 and fix the cell array structure 100 in the pack case 200.

After that, the manufacturer or the like may connect the inlet connection portion 430 and the outlet connection portion 450 of the cooling line 400 to the third connection portion 316, 326 of the main cooling pipe unit 310, 320 to can complete the assembly of the cooling line of the battery pack 10.

As such, in the battery pack 10 according to an embodiment of the present disclosure, the cooling pipe units 300 are assembled when the cell array structure 100 is assembled, and then the cooling line 400 is connected to the main cooling pipe units 310, 320 of the cooling pipe unit 300 to completely assemble the cooling line. Thus, the cooling line assembly structure is simplified, thereby significantly increasing the overall assembly process efficiency.

Hereinafter, the structure of the cooling pipe unit 300 related to the circulation of the cooling medium will be described in more detail.

Referring to FIGS. 3 to 7 again, the cooling pipe units 310, 320, 330, 340 may include inlet pipes 310, 330 and outlet pipes 320, 340.

These inlet pipes 310, 330 may guide the cooling medium from the cooling line to the plurality of cooling tubes 130. The inlet pipes 310, 330 may include the inlet pipe 310 of the main cooling pipe unit 310 and the inlet pipes 330 of the plurality of side cooling pipe units 330.

The outlet pipes 320, 340 are for exporting the cooling medium, which has circulated inside the plurality of cooling tubes 130, to the cooling line 400, and may include the outlet pipe 320 of the main cooling pipe unit 320 and the outlet pipes 340 of the plurality of side cooling pipe units 340.

The inlet pipes 310, 330 and the outlet pipes 320, 340 may be disposed between the ends of the plurality of cooling tubes 130 in the height direction (Z-axis direction) of the plurality of cooling tubes 130. Depending on this arrangement, the inlet pipes 310, 330 and the outlet pipes 320, 340 may not expose out of the cooling tubes 130 in the height direction (Z-axis direction) of the cooling tubes 130.

Therefore, in the battery pack 10 according to an embodiment of the present disclosure, when an external shock or the like is generated in the height direction (Z-axis direction) of the pack case 200, primary shock transmission to the inlet pipes 310, 330 and the outlet pipes 320, 340 may be prevented, so the risk of damage to the cooling pipe units 300 that may occur due to an external shock may be effectively prevented.

The inlet pipes 310, 330 may be disposed lower than the outlet pipes 320, 340 in the height direction (Z-axis direction) of the ends of the plurality of cooling tubes 130. Accordingly, the cooling medium delivered from the cooling line 400 may be supplied to the bottom of the cooling tubes 130 through the inlet pipes 310, 330 arranged relatively lower, and the cooling medium, which has circulated inside the cooling tube 130, may be exported from the upper portion of the cooling tubes 130 to the cooling line 400 through the outlet pipes 320, 340 disposed above the inlet pipes 310, 330 (+Z-axis direction). If the cooling medium supplied from the cooling line 400 is first supplied to the lower side of the cooling tube 130, the flow efficiency of the cooling medium may be further improved. However, this is only an example, and depending on the design, it may also be possible that the inlet pipes are disposed higher than the outlet pipes.

Referring to FIGS. 1 and 2 again, the pack case 200 of the battery pack 10 may include a bottom plate 220 and an outer side wall 260.

The bottom plate 220 is to support the bottom of the cell array structure 100 and may form the bottom of the pack case 200. The bottom plate 220 may have a predetermined protruding rib structure. The rib structure may function as a predetermined venting pass line that guides the flow path of thermal event gas or the like at the bottom of the cell array structure.

The outer side wall 260 is connected to the bottom plate 220 and may form a side edge of the pack case 200. The outer side wall 260 is connected to the side wall 152 of the side frame 150 of the cell array structure 100 by the fastening member or the like, so that the cell array structure 100 may be more stably fixed within the pack case 200.

The battery pack 10 may include an electrical unit 500. The electrical unit 500 is provided in the pack case 200 and may include electrical components such as a BMS that controls the cell array structure 100 of the battery pack 10. The electrical unit 500 may further include components such as a current sensor, fuse, and service plug.

Although not shown, the battery pack 10 may further include a bus bar assembly and a pack cover.

The bus bar assembly is for electrical connection of the battery cells 110 of the cell array structure 100 and may be provided on the upper side of the cell array structure 100 and connected to the battery cells 110.

The pack cover is to accommodate the cell array structure 100 along with the pack case 200, and may be coupled with the pack case 200 to cover the upper side of the cell array structure 100. Meanwhile, the cooling line 400 may be exposed to the outside of the pack cover for connection to an external cooling device.

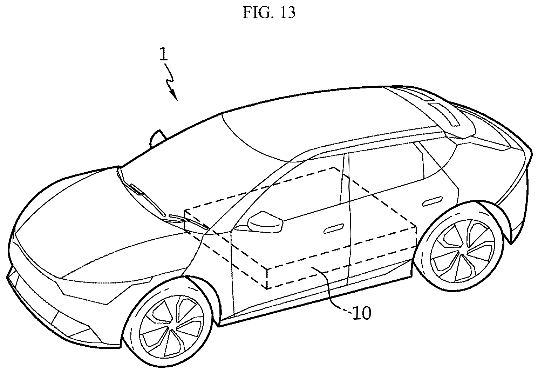

FIG. 13 is a drawing for illustrating a vehicle according to an embodiment of the present disclosure.

Referring to FIG. 13, the vehicle 1 according to an embodiment of the present disclosure may include at least one battery pack 10 according to the above-described embodiment of the present disclosure. In addition, the vehicle 1 according to an embodiment of the present disclosure may further include various other components included in a vehicle, in addition to the battery pack 10. For example, the vehicle 1 according to an embodiment of the present disclosure may further include a vehicle body, a motor, and a control device such as an ECU (electrical control unit), in addition to the battery pack 10 according to an embodiment of the present disclosure.

In addition, the battery pack 10 according to an embodiment of the present disclosure may be provided to other devices, instruments, and equipment, such as an energy storage device (ESS) that uses secondary batteries, in addition to the vehicle 1.

According to various embodiments as above, it is possible to provide a battery pack 10 that may increase space utilization and maximize energy density by simplifying a cooling line structure, and a vehicle 1 including the battery pack.

In addition, according to various embodiments as above, it is possible to provide a battery pack 10 that may increase process efficiency by increasing assembly, and a vehicle 1 including the battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack, comprising:
a cell array structure including a plurality of battery cells and a plurality of cooling tubes provided between the plurality of battery cells;
a pack case configured to accommodate the cell array structure; and
a cooling pipe unit installed in communication with a cooling line for circulation of a cooling medium and configured to connect the plurality of cooling tubes in one direction within the pack case along a stacking direction of the plurality of cooling tubes.

2. The battery pack according to claim 1,
wherein the cooling pipe unit is disposed between ends of the plurality of cooling tubes and configured not to protrude beyond the ends of the plurality of cooling tubes in a direction toward an inner wall of the pack case.

3. The battery pack according to claim 1,
wherein the cooling pipe unit has a smaller thickness than ends of the plurality of cooling tubes.

4. The battery pack according to claim 1,
wherein the cooling pipe unit is configured not to protrude beyond ends of the plurality of cooling tubes in a height direction of the ends of the plurality of cooling tubes.

5. The battery pack according to claim 1,
wherein the cooling pipe unit is provided in plurality, and
wherein the plurality of cooling pipe units are sequentially connected to the plurality of cooling tubes in the one direction along the stacking direction of the plurality of cooling tubes when assembling the cell array structure.

6. The battery pack according to claim 5,
wherein the plurality of cooling pipe unit includes:
a main cooling pipe unit connected to the cooling line; and
a plurality of side cooling pipe units configured to communicate with the main cooling pipe.

7. The battery pack according to claim 6,
wherein the main cooling pipe unit is disposed between the plurality of side cooling pipe units.

8. The battery pack according to claim 1,
wherein the cell array structure includes a side frame that accommodates the plurality of battery cells in a longitudinal direction of the pack case, and
wherein the cooling pipe unit is provided to face the side frame in the longitudinal direction and disposed to be spaced apart from the side frame by a predetermined distance.

9. The battery pack according to claim 8,
wherein the side frame includes:
a pair of side walls disposed on both sides of an outermost side of the cell array structure and configured to support at least one row of battery cells in the longitudinal direction of the pack case; and
a plurality of side structures provided between the pair of side walls and configured to support at least two rows of battery cells in the longitudinal direction of the pack case,
wherein the cooling pipe unit is provided to face the plurality of side structures in the longitudinal direction of the pack case and disposed to be spaced apart from the plurality of side structures by a predetermined distance.

10. The battery pack according to claim 9,
wherein the cooling pipe unit is provided in plurality, and
wherein a length of each cooling pipe unit is smaller than or equal to a width of each side structure in the stacking direction.

11. The battery pack according to claim 8,
wherein ends of the plurality of cooling tubes protrude out of the side frame in the longitudinal direction of the pack case, and
wherein the cooling pipe unit is sequentially connected to the plurality of cooling tubes along a stacking direction of the side frame.

12. The battery pack according to claim 1,
wherein the cooling pipe unit includes:
an inlet pipe configured to guide the cooling medium from the cooling line to the plurality of cooling tubes; and
an outlet pipe configured to export the cooling medium, which has circulated through the plurality of cooling tubes, to the cooling line,
wherein the inlet pipe and the outlet pipe are disposed between ends of the plurality of cooling tubes in a height direction of the ends of the plurality of cooling tubes.

13. The battery pack according to claim 12,
wherein the inlet pipe and the outlet pipe are configured not to protrude beyond the ends of the plurality of cooling tubes in the height direction of the ends of the plurality of cooling tubes.

14. The battery pack according to claim 12,
wherein the inlet pipe is disposed lower than the outlet pipe in the height direction of the ends of the plurality of cooling tubes.

15. A vehicle, comprising the battery pack according to any one of claims 1 to 14.
